(19) Europäisches Patentamt
European Patent Office
Office européen des brevets

(11) **EP 4 425 386 A1**

(12) **EUROPEAN PATENT APPLICATION**

(43) Date of publication:
**04.09.2024 Bulletin 2024/36**

(51) International Patent Classification (IPC):
**G06N 3/096** (2023.01) **G06N 3/045** (2023.01)

(21) Application number: **23159224.7**

(22) Date of filing: **28.02.2023**

(52) Cooperative Patent Classification (CPC):
**G06N 3/096; G06N 3/045**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **NavInfo Europe B.V.**
**5657 DB Eindhoven (NL)**

(72) Inventors:
• **BHAT, Prashant Shivaram**
**5657 DB Eindhoven (NL)**

• **RENJITH, Bharath**
**5657 DB Eindhoven (NL)**
• **ARANI, Elahe**
**5657 DB Eindhoven (NL)**
• **ZONOOZ, Bahram**
**5657 DB Eindhoven (NL)**

(74) Representative: **van Breda, Jacobus et al**
**Octrooibureau Los & Stigter B.V.**
**P.O. Box 20052**
**1000 HB Amsterdam (NL)**

(54) **METHOD AND SYSTEM FOR CONTINUAL LEARNING IN ARTIFICIAL NEURAL NETWORKS BY IMPLICIT-EXPLICIT REGULARIZATION IN THE FUNCTION**

(57) A computer-implemented method for continual learning in deep neural networks that introduces robust inductive biases by intertwining implicit regularization, using a projection head through auxiliary contrastive representation learning, and explicit consistency regularization on the soft targets using exponential moving average. To further leverage the global relationship between representations learned, the method of the current invention comprises a regularization strategy of guiding the classifier towards the activation correlations in the unit hypersphere of the projection head. These implicit and explicit regularizations encourage the model to learn generalizable representations, thereby reducing task interference and catastrophic forgetting.

Fig. 1

EP 4 425 386 A1

**Description**

The invention relates to a computer-implemented method and system for continual learning in artificial neural networks by implicitly and explicitly regularizing the function space of said artificial neural networks.

**General Description**

Continual learning on a sequence of tasks with nonstationary data distributions results in catastrophic forgetting of older tasks as training the CL model with new information interferes with previously consolidated knowledge [1,2]. Experience-Rehearsal (ER) [9] is one of the first works to address catastrophic forgetting by explicitly maintaining a memory buffer and interleaving previous task samples from the memory with the current task samples. Several works such as GEM [13], iCaRL [15] build on top of the ER to further reduce catastrophic forgetting in CL. More recently, under low buffer regimes, Deep Retrieval and Imagination (DRI) [14] uses a generative model to produce additional (imaginary) data based on limited memory. ER-ACE [16] focuses on preserving learned representations from drastic adaptations by combating representation drift under low buffer regimes. To leverage learning across tasks in a resource-efficient manner, Gradient Coreset Replay (GCR) [17] proposes maintaining a core-set to select and update the memory buffer. Although rehearsal-based methods are fairly effective in challenging CL scenarios, they suffer from overfitting, exacerbated representation drift and prior information loss in low-buffer regimes thereby hurting the generalizability of the model.

Regularization, whether implicit or explicit, is an important component in reducing the generalization error in DNNs. Although the parameter norm penalty is one way to regularize the CL model, parameter sharing using multitask learning [11] can lead to better generalization and generalization error bounds if there exists a valid statistical relationship between tasks. Contrastive representation learning [12] that solves pretext prediction tasks to learn generalizable representations across a multitude of downstream tasks is an ideal candidate as an auxiliary task for implicit regularization. In CL, Task Agnostic Representation Consolidation (TARC) [7] proposes a two-stage learning paradigm in which the model learns generalizable representations first using Supervised Contrastive loss (SupCon) [12] followed by a modified supervised learning stage. Similarly, Co2L [18] first learns representations using modified SupCon loss and then trains a classifier only on the last task samples and buffer data. OCDNet [19] employs a student model, and distills relational and adaptive knowledge using modified SupCon objective. However, OCDNet does not leverage the generic information captured within the projection head to further reduce the overfitting of the classifier.

Explicit regularization in the function space imposes soft constraints on the parameters and optimizes the learning goal to converge upon a function that maps inputs to outputs [20] . Therefore, several methods opt to directly limit how much the input/output function changes between tasks to promote generalization [3,4,8,20]. Function Distance Regularization (FDR) [20] and Dark Experience Replay (DER++) [4] save the model responses at task boundaries and apply consistency regularization while replaying data from the memory buffer. Instead of storing the responses in the buffer, Complementary Learning System-ER (CLS-ER) [3] maintains dual semantic memories to enforce consistency regularization.

However, multitasking and explicit classifier regularization in addition to consistency regularization in these approaches might enable further generalization in CL.

Rehearsal-based approaches that maintain a bounded memory buffer to store and replay samples from previous tasks have been fairly successful in mitigating catastrophic forgetting. However, these methods show strong performance only in presence of large buffer size and fail to perform well under low-buffer regimes and longer task sequences due to overfitting, prior information loss and representation drift. The method of the current invention comprises the step of intertwining implicit and explicit regularization to instill robust inductive biases and improve the generalization of the continual learning model, especially in low-buffer regimes.

It is an object of the current invention to correct the shortcomings of the prior art and to provide a solution for instilling robust inductive biases and for improving the generalization of the continual learning model, especially in low-buffer regimes. This and other objects which will become apparent from the following disclosure, are provided with a computer-implemented method for continual learning in artificial neural networks, a computer-readable medium, and an autonomous vehicle comprising a data processing system, having the features of one or more of the appended claims.

In a first aspect of the invention, the computer-implemented method for learning of an artificial neural network on an input of a continual stream of tasks, wherein said method comprises a continual learning model comprising the steps of:

- maintaining a fixed-size memory buffer for storing data distributions of previous tasks; and
- providing the network with:

    - an encoder (backbone);
    - a linear classifier;

- a classifier projection with a multi-layer perceptron;
- a projection head,

wherein the method comprises the steps of:

- implicitly regularizing the continual learning model by learning generalizable features through an auxiliary task such as supervised contrastive learning; and
- explicitly regularizing the learning model by:

  - calculating an exponentially moving average of parameters of the continual learning model; and
  - using predictions of said exponentially moving average of the model for regularizing the continual learning model in a function space of the linear classifier and in a function space of the projection head; and
  - aligning geometric structures within a unit hypersphere of the linear classifier with a unit hypersphere of the projection head.

The input of the continual stream of tasks can be obtained from images captured by a video recorder, a scene recorder or any other type of image capturing device, in particular but not exclusively as mounted on a vehicle to continually adapt and acquire knowledge from an environment surrounding said vehicle.

The step of learning generalizable features through an auxiliary task preferably comprises the steps of:

- augmenting multiples correlated views of an input sample; and
- propagating said correlated views forward through an encoder and a projection head of the network.

The method of the current invention preferably comprises the step of creating positive and negative embedding pairs of input samples using label information, wherein input samples belonging to a same class of an anchor are labelled as positives, and wherein input samples belonging to a different class than the class of the anchor are labelled as negatives.

The method of the current invention preferably comprises the step of learning visual representations by maximizing a cosine similarity between positive pairs of said correlated views while simultaneously minimizing a cosine similarity between negative pairs of said correlated views, wherein

The method of the current invention preferably comprises the step of using a mapping function for connecting geometric relationships between samples in the unit hypersphere of the classifier projection and in the unit hypersphere of the projection head.

The method of the current invention preferably comprises the step of regularizing the output activations of the classifier projection by capturing mean element-wise squared differences in correlations of l2-normalized output activations of the projection head and correlations of l2-normalized output activations of the classifier projection.

In a second embodiment of the invention, the computer-readable medium is provided with a computer program wherein when said computer program is loaded and executed by a computer, said computer program causes the computer to carry out the steps of the computer-implemented method according to any one of aforementioned steps.

In a third embodiment of the invention, the autonomous vehicle comprising a data processing system loaded with a computer program wherein said program is arranged for causing the data processing system to carry out the steps of the computer-implemented method according to any one of aforementioned steps for enabling said autonomous vehicle to continually adapt and acquire knowledge from an environment surrounding said autonomous vehicle.

The input of the continual stream of tasks comprises images captured by any image capturing device. When said images are fed into a system controlled according to the computer-implemented method of the invention, the system will have robust inductive biases and an improved learning of general features, especially in low-buffer regimes. This may improve the swift adaptation of said autonomous vehicle to the environment.

The invention will hereinafter be further elucidated with reference to the drawing of an exemplary embodiment of a computer-implemented method, a computer program and an autonomous vehicle comprising a data processing system according to the invention that is not limiting as to the appended claims.

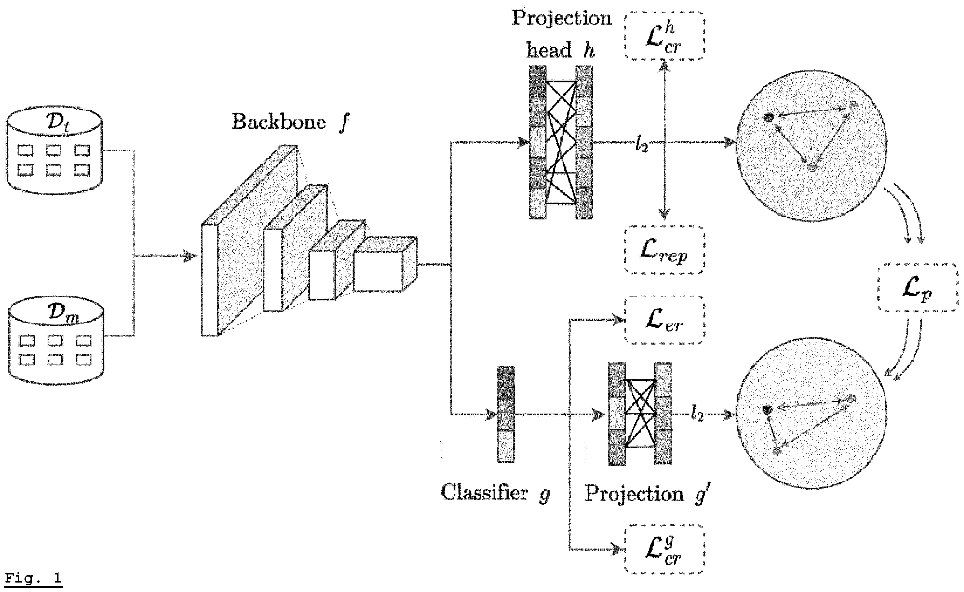

In the drawing, figure 1 shows a schematic diagram for the computer-implemented method according to the invention.

Whenever in the figures the same reference numerals are applied, these numerals refer to the same parts.

## Detailed description

Deep neural networks (DNNs) deployed in the real world often bump into dynamic data streams and need to learn sequentially with data becoming progressively available over time [1]. However, continual learning (CL) over a sequence of tasks causes catastrophic forgetting (CF) [2,9], a phenomenon in which acquiring new information disrupts the consolidated knowledge, and, in the worst case, previously acquired information is completely forgotten. Humans, on the other hand, excel at continual learning by incrementally acquiring, consolidating and transferring knowledge across a multitude of tasks [6]. Humans use robust inductive biases to generalize better while reusing the consolidated knowledge [10].

Regularization is a form of inductive bias that has been traditionally used in training DNNs for improving generalization.

Implicit regularization biases the learning objective without enforcing any explicit constraints on the objective. Multitask learning (MTL), which entails learning auxiliary tasks, acts as an implicit regularizer by sharing representations between related tasks [11]. Contrastive representation learning (CRL), where representations of similar samples are pulled closer to each other while dissimilar ones are pushed away, is a good candidate for the auxiliary tasks [12].

Explicit regularization optimizes learning objective by imposing additional constraints. Consistency regularization is one such approach where the consistency in predictions is enforced between a source model and a target model using soft targets [5]. Different choices of source model can distill knowledge to induce bias that improve generalization [26,28] or robustness [27,30] or other desirable properties [29].

Thus intertwining proper implicit and explicit regularization can instill inductive biases for improving the model performance.

Preliminary

CL typically comprises of $t \in \{1, 2, .., T\}$ sequence of tasks with the model learning one task at a time. Each task is specified by a task-specific data distribution $D_t$ with $\{(xi, yi)\}_{i=1}^{N}$ pairs. The CL model $\Phi_\theta = f, g, g', h$ consists of a shared backbone $f$, a linear classifier $g$, a classifier projection MLP $g'$ and a projection head $h$. The classifier $g$ represents all classes belonging to all tasks and the projection head $h$ captures the l2-normalized representation embeddings. The classifier's embeddings are further projected onto a unit-hypersphere using another projection MLP $g'$. CL is especially challenging when data pertaining to previous tasks vanish as the CL model progresses on to the next task. Therefore, to approximate the previously seen task-specific data distributions, the method of the current invention comprises the step of maintaining a memory buffer $D_m$ using reservoir sampling [21]. To restrict the empirical risk on all tasks seen so far, ER minimizes the following objective:

$$\mathcal{L}_{er} = \frac{1}{\sum_t |\mathcal{B}|} \sum_{\substack{(x,y) \sim \mathcal{B} \\ \mathcal{B} \in \mathcal{D}_t \cup \mathcal{D}_m}} \mathcal{L}_{ce}(\sigma(g(f(x))), y) \qquad (1)$$

where $B$ is a training batch, $L_{ce}$ is a cross-entropy loss, $t$ is the index of the current task, and $\sigma(.)$ is the softmax function. When the buffer size is limited, the CL model learns sample-specific features rather than class-wide/task-wide representative features, resulting in poor performance. Therefore, the method of the current invention comprises an implicit regularization step using parameter sharing and multitask learning, and explicit regularization step in the function space to guide the optimization of the CL model towards generalization.

Implicit regularization

The method of the current invention preferably comprises the step of learning an auxiliary task that complements continual supervised learning by accumulating generalizable representations in shared parameters. To this end, the method of the current invention preferably comprises the step of using a supervised contrastive loss (CRL) [12] for learning shared representation. CRL involves highly correlated multiple augmented views of the same sample which are then propagated forward through the encoder $f$ and the projection head $h$.

To learn visual representations, the CL model should learn to maximize the cosine similarity (l2-normalized dot product) between the positive pairs from the multiple views while simultaneously pushing away the negative embeddings from the rest of the batch. To this end, the method of the current invention preferably comprise the step of using label information to create positive and negative embedding pairs in a training batch. Specifically, samples belonging to the same class as the anchor are considered positive, while the rest of the training batch samples are considered negative. The loss takes the following form:

$$\mathcal{L}_{rep} = \sum_{i \in I} \frac{-1}{|P(i)|} \sum_{p \in P(i)} [ \ \langle z_i \cdot z_p \rangle / \tau$$
$$- \log \sum_{n \in N(i)} \exp\left(\langle z_i \cdot z_n \rangle / \tau\right) \ ] \qquad (2)$$

where $z = h(f(.))$ is any arbitrary 128-dimensional l2-normalized projection, $\tau$ is a temperature parameter, $I$ is a set of $B$ indices, $N(i) \equiv I\backslash\{i\}$ is a set of negative indices and $P(i) \equiv \{p \in A(i) : y_p = y_i\}$ is a set of projection indices that belong to the same class as the anchor $z_i$ and $|P(i)|$ is its cardinality. The use of multiple positives and negatives for each anchor based on the class membership in Eqn. 2 implicitly encourages learning from hard positives and hard negatives without actually requiring hard negative mining.

Theorem 1 (Wen & Li (2021) [22]): (Feature similarity) Features learned by $f$ through CRL are similar to those learned via cross-entropy as long as: (i) The augmentation in CRL do not corrupt semantic information, and (ii) The labels in cross-entropy rely mostly on these semantic information.

Let $x_p^+$ and $x_p^{++}$ be two augmented positive samples of such that $y_p^+ = y_p^{++}$. Furthermore, it is assumed that the raw data samples are generated in the following form: $x_p = \zeta_p + \xi_p$ where $\zeta_p$ represents the semantic information in the image while $\xi_p \sim D_\xi = N(0, \sigma)$ represents spurious noise. Given semantic preserving augmentations, Wen & Li (2021) [22] state that the contrastive learning learns similar discriminative features as cross-entropy. Similarly, as CRL in Equation 2 employs both semantic-preserving augmentations and labels to create positive pairs, it can be assumed that the inner product from semantic information $< z_{\zeta_p^+}, z_{\zeta_p^{++}} >$ will overwhelm that from the noisy signal $< z_{\xi_p^+}, z_{\xi_p^{++}} >$. Therefore, Equation 2 exerts some form of implicit regularization during optimization to focus on semantic information contained in the images (such as from the environment) rather than spurious correlations. As it is expected that labels in cross-entropy to focus on semantic features to learn classification, it is hypothesized that both CRL and cross-entropy share a common hypothesis class and sharing representations across these tasks especially benefits CL under low-buffer regimes.

Explicit regularization

The CL model equipped with multitask learning implicitly encourages the shared encoder $f$ to learn generalizable features. However, the classifier $g$ that decides the final predictions is still prone to overfitting under low buffer regimes. Therefore, the method of the current invention aims to explicitly regularize the learning trajectory of the CL model in the function space defined by the classifier $g$. To this end, the output activation of encoder $f$ is denoted as $F \in R^{B,D_f}$, that of projection head $h$ as $Z \in R^{B,D_h}$, and that of classifier projection $g'$ as $C \in R^{B,D_g}$, where $D_f, D_g, D_h$ denote the dimensions of output Euclidean spaces. Let $\mathcal{F}_g \in R^{D_g}$ and $\mathcal{F}_h \in R^{D_h}$ be the function spaces represented by the classifier $g$ and the projection head $h$. Let $\theta$ and $\theta_{EMA}$ be parameters of the CL model and its corresponding exponential moving average (EMA). The EMA model is then stochastically updated as follows:

$$\theta_{EMA} = \begin{cases} \theta_{EMA}, & \text{if } \gamma \geq \mathcal{U}(0,1) \\ \eta\,\theta_{EMA} + (1-\eta)\,\theta, & \text{otherwise} \end{cases} \qquad (3)$$

where $\eta$ is a decay parameter and $\gamma$ is an update rate. The EMA of a model can be considered to form a self-ensemble of intermediate model states that leads to a better internal representation [3]. Therefore, the method of the current invention comprises the step of using the soft targets (predictions) of the EMA model to regularize the learning trajectory in the function spaces $\mathcal{F}_g$ and $\mathcal{F}_h$ of the CL model:

$$\mathcal{L}_{cr}^{g} \triangleq \underset{(x_j,y_j)\sim\mathcal{D}_m}{\mathbb{E}} \|z - z_e\|_F^2$$

$$\mathcal{L}_{cr}^{h} \triangleq \underset{(x_j,y_j)\sim\mathcal{D}_m}{\mathbb{E}} \|\hat{y} - \hat{y}_e\|_F^2 \qquad (4)$$

where $\|.\|_F$ is the Frobenius norm, $z$ and $\hat{y}$ are projection head and classifier responses of the CL model, respectively, and $z_e$ and $\hat{y}_e$ are that of the EMA model. As soft targets carry more information per training sample than ground truth labels, knowledge of the previous tasks can be better preserved by ensuring consistency in predictions thereby leading to drastic reductions in overfitting.

It is pertinent to note that restricting the output space to a unit hypersphere can improve training stability in representation learning [23]. Moreover, well-clustered projections in the hypersphere are linearly separable from the rest of the samples. Therefore, regularizing classifier using representations learned on a unit hypersphere can considerably reduce the generalization error. As semantically similar inputs tend to elicit similar responses. To this end, the method of the current invention preferably comprises the step of aligning geometric structures within the classifier's hypersphere with that of the projection head's hypersphere to further leverage global relationship between samples established using instance discrimination task. It is assumed that there exists a mapping function $\mathcal{M}: \mathbb{R}^{D_h} \to \mathbb{R}^{D_g}$ and its inverse $\mathcal{M}^{-1}: \mathbb{R}^{D_g} \to \mathbb{R}^{D_h}$ that establish a connection between the geometric relationship between the points in both hyperspheres. Therefore, to guide the classifier towards the activation correlations in the unit hypersphere of the projection head, the method of the current invention comprises the step of regularizing the differences in the outer products of $Z$ and $C$ i.e.,

$$G_h = ZZ^T \in \mathbb{R}^{D_h,D_h}$$

$$G_g = CC^T \in \mathbb{R}^{D_g,D_g} \qquad (5)$$

$$\mathcal{L}_p = \frac{1}{\mathcal{B}^2} \|stopgrad(G_h) - G_g\|_F^2 \qquad (6)$$

where $G_h$ and $G_g$ are outer products, and $stopgrad(.)$ ensures that the backpropagation of gradients occurs only through the classifier. Equation 4 regularizes both the classifier and the projection head using the EMA of the CL model while $L_p$ in Equation 6 captures the mean element-wise squared difference between $G_h$ and $G_g$ matrices of CL model.

Theorem 2 : (Johnson-Lindenstrauss Lemma) : Let $\varepsilon \in (0,1)$ and $D_g > 0$ such that for any integer $n$, $D_g \geq 4(\varepsilon^2/2 - \varepsilon^3/3)^{-1}\ln n$. Then for any set of points $Z \in R^{D_h}$, there exists a mapping function $\mathcal{M}: R^{D_h} \to R^{D_g}$ s.t $\forall \ p,q \in P, (1 - \epsilon)\|p - q\|^2 \leq \|\mathcal{M}(p) - \mathcal{M}(q)\|^2 \leq (1 + \epsilon)\|p - q\|^2$

Fundamentally, Johnson-Lindenstrauss Lemma [24] proves that one can effectively reduce the dimensions of any $n \in R^{D_h}$ points in an Euclidean subspace to $D_g = 0$ $\log n/\varepsilon^2$ dimensions without distorting the distances between n points more than $1\pm\varepsilon$. Magen (2002) [25] further observed that Johnson-Lindenstrauss Lemma preserves any '$D_g$ dimensional angle' by projecting down to dimension $O(D_g\varepsilon^{-2}\log n)$. Therefore, it can be safely assumed that it is possible to transfer geometric structures in projection head to low-dimensional classifier's hypersphere without the loss of generality. To this end, the method of the current invention preferably comprises the step of introducing $L_p$ as a mapping function to emulate rich geometric structures learnt within projection head's hypersphere to compensate for the weak supervision in the classifier under low-buffer regimes.

Putting it all together

During CL training, batches of current task are forward propagated through $\Phi_\theta$ to obtain classification and projection embeddings. The method of the current invention preferably comprises the step of employing a two-pronged approach aimed at implicit regularization using hard parameter sharing and multitask learning, and a novel explicit regularization in the function space to guide the optimization of the CL model towards generalization under low buffer regimes.

Specifically, $\Phi_\theta$ learns generalizable features through Eqn. 2 and task-specific features through Eqn. 1. To consolidate the information pertaining to previous tasks better, the method of the current invention preferably comprises the step of maintaining a memory buffer $\mathcal{D}_m$ and an EMA of the CL model which also serves as an inference model for evaluation. The method of the current invention preferably comprises the step of enforcing consistency in predictions on rehearsal data using Eqn. 4. To further reduce overfitting and discourage label bias in the classifier, the method of the current invention preferably comprises the step of emulating geometric structures using Eqn. 6. During each training iteration, the method of the current invention preferably comprises the step of updating the memory buffer using reservoir sampling [21] and the stochastically updating the EMA using Eqn. 3. The overall learning objective is as follows:

$$\mathcal{L} \triangleq \mathop{\mathbb{E}}_{(x,y)\sim\mathcal{D}_t\cup\mathcal{D}_m} \left[ \mathcal{L}_{er} + \alpha\,\mathcal{L}_{rep} + \beta\,\mathcal{L}_p \right] + \mathop{\mathbb{E}}_{(x,y)\sim\mathcal{D}_m} \lambda\left[\mathcal{L}_{cr}^g + \mathcal{L}_{cr}^h\right] \tag{7}$$

where $\alpha, \beta$ and $\lambda$ are hyperparameters.

The method of the current invention, called ImEx-Reg, is illustrated in Figure 1 and is detailed in Algorithm 1.

Embodiments of the present invention can include every combination of features that are disclosed herein independently from each other.

---

**Algorithm 1** Proposed Method

---

**Input:** Data streams $\mathcal{D}_t$, Model $\Phi_\theta = \{f, g, g', h\}$, Hyperparameters $\alpha$, $\beta$ and $\lambda$, Memory buffer $\mathcal{D}_m \leftarrow \{\}$

1: **for all** tasks $t \in \{1, 2, .., T\}$ **do**
2:     **for all** Iterations $e \in \{1, 2, .., E\}$ **do**
3:         $\mathcal{L} = 0$
4:         Sample a minibatch $(X_t, Y_t) \in \mathcal{D}_t$
5:         $F_t = f(X_t)$
6:         $\hat{Y}_t, Z_t, C_t = g(F_t), h(F_t), g'(g(F_t))$
7:         **if** $\mathcal{D}_m \neq \emptyset$ **then**
8:             Sample a minibatch $(X_m, Y_m) \in \mathcal{D}_m$
9:             $F_m = f(X_m)$
10:             $\hat{Y}, Z, C = g(F_m), h(F_m), g'(g(F_m))$
11:             $F_e = f_e(X_m)$
12:             $\hat{Y}_e, Z_e, C_e = g_e(F_m), h_e(F_m), g'_e(g_e(F_m))$
13:             $\mathcal{L} \mathrel{+}= \lambda\left[\mathcal{L}_{cr}^g + \mathcal{L}_{cr}^h\right]$
14:         $\mathcal{L} \mathrel{+}= \mathcal{L}_{er} + \alpha\,\mathcal{L}_{rep} + \beta\,\mathcal{L}_p$
15:         Update $\Phi_\theta$ and $\mathcal{D}_m$
16: **return** model $\Phi_\theta$

---

Typical application areas of the invention include, but are not limited to:

- Road condition monitoring
- Road signs detection
- Parking occupancy detection
- Defect inspection in manufacturing
- Insect detection in agriculture
- Aerial survey and imaging

Although the invention has been discussed in the foregoing with reference to an exemplary embodiment of the method of the invention, the invention is not restricted to this particular embodiment which can be varied in many ways without departing from the invention. The discussed exemplary embodiment shall therefore not be used to construe the append-ed claims strictly in accordance therewith. On the contrary the embodiment is merely intended to explain the wording of the appended claims without intent to limit the claims to this exemplary embodiment. The scope of protection of the invention shall therefore be construed in accordance with the appended claims only, wherein a possible ambiguity in the wording of the claims shall be resolved using this exemplary embodiment.

Variations and modifications of the present invention will be obvious to those skilled in the art and it is intended to cover in the appended claims all such modifications and equivalents. The entire disclosures of all references, applications, patents, and publications cited above are hereby incorporated by reference. Unless specifically stated as being "essential" above, none of the various components or the interrelationship thereof are essential to the operation of the invention. Rather, desirable results can be achieved by substituting various components and/or reconfiguration of their relationships with one another.

Optionally, embodiments of the present invention can include a general or specific purpose computer or distributed system programmed with computer software implementing steps described above, which computer software may be in any appropriate computer language, including but not limited to C++, FORTRAN, ALGOL, BASIC, Java, Python, Linux, assembly language, microcode, distributed programming languages, etc. The apparatus may also include a plurality of such computers / distributed systems (e.g., connected over the Internet and/or one or more intranets) in a variety of hardware implementations. For example, data processing can be performed by an appropriately programmed microprocessor, computing cloud, Application Specific Integrated Circuit (ASIC), Field Programmable Gate Array (FPGA), or the like, in conjunction with appropriate memory, network, and bus elements. One or more processors and/or microcontrollers can operate via instructions of the computer code and the software is preferably stored on one or more tangible non-transitive memory-storage devices.

References:

1. Parisi, German I., et al. "Continual lifelong learning with neural networks: A review." Neural Networks 113 (2019): 54-71.

2. Michael McCloskey and Neal J Cohen. "Catastrophic interference in connectionist networks: The sequential learning problem." In Psychology of learning and motivation, volume 24, pages 109-165. Elsevier, 1989. 1, 2

3. Arani, Elahe, Fahad Sarfraz, and Bahram Zonooz. "Learning fast, learning slow: A general continual learning method based on complementary learning system." arXiv preprint arXiv:2201.12604 (2022).

4. Buzzega, Pietro, Matteo Boschini, Angelo Porrello, Davide Abati, and Simone Calderara. "Dark experience for general continual learning: a strong, simple baseline." Advances in neural information processing systems 33 (2020): 15920-15930.

5. Bhat, Prashant, Bahram Zonooz, and Elahe Arani. "Consistency is the key to further mitigating catastrophic forgetting in continual learning." arXiv preprint arXiv:2207.04998 (2022).

6. Li, Zhizhong, and Derek Hoiem. "Learning without forgetting." IEEE transactions on pattern analysis and machine intelligence 40, no. 12 (2017): 2935-2947.

7. Bhat, Prashant, Bahram Zonooz, and Elahe Arani. "Task Agnostic Representation Consolidation: a Self-supervised based Continual Learning Approach." arXiv preprint arXiv:2207.06267 (2022).

8. Sarfraz, Fahad, Elahe Arani, and Bahram Zonooz. "SYNERgy between SYNaptic consolidation and Experience Replay for general continual learning." arXiv preprint arXiv:2206.04016 (2022).

9. Ratcliff, Roger. "Connectionist models of recognition memory: constraints imposed by learning and forgetting functions." Psychological review 97.2 (1990): 285.

10. Goyal, Anirudh, and Yoshua Bengio. "Inductive biases for deep learning of higher-level cognition." Proceedings of the Royal Society A 478.2266 (2022): 20210068.

11. Sebastian Ruder. "An overview of multi-task learning in deep neural networks". arXiv preprint arXiv:1706.05098, 2017. 1

12. Khosla, Prannay, Piotr Teterwak, Chen Wang, Aaron Sarna, Yonglong Tian, Phillip Isola, Aaron Maschinot, Ce Liu, and Dilip Krishnan. "Supervised contrastive learning." Advances in Neural Information Processing Systems 33 (2020): 18661-18673.

13. Lopez-Paz, David, and Marc'Aurelio Ranzato. "Gradient episodic memory for continual learning." Advances in neural information processing systems 30 (2017).

14. Wang, Zhen, Liu Liu, Yiqun Duan, and Dacheng Tao. "Continual learning through retrieval and imagination." In AAAI Conference on Artificial Intelligence, vol. 8. 2022.

15. Rebuffi, Sylvestre-Alvise, et al. "icarl: Incremental classifier and representation learning." Proceedings of the IEEE conference on Computer Vision and Pattern Recognition. 2017.

16. Caccia, Lucas, Rahaf Aljundi, Nader Asadi, Tinne Tuytelaars, Joelle Pineau, and Eugene Belilovsky. "New insights on reducing abrupt representation change in online continual learning." arXiv preprint arXiv:2203.03798 (2022).

17. Tiwari, Rishabh, Krishnateja Killamsetty, Rishabh Iyer, and Pradeep Shenoy. "GCR: Gradient Coreset Based Replay Buffer Selection For Continual Learning." In Proceedings of the IEEE/CVF Conference on Computer Vision and Pattern Recognition, pp. 99-108. 2022.

18. Cha, Hyuntak, Jaeho Lee, and Jinwoo Shin. "Co2l: Contrastive continual learning." In Proceedings of the IEEE/CVF International Conference on Computer Vision, pp. 9516-9525. 2021.

19. Li, Jin, Zhong Ji, Gang Wang, Qiang Wang, and Feng Gao. "Learning from Students: Online Contrastive Distillation Network for General Continual Learning." In Proceedings of the International Joint Conference on Artificial Intelligence, vol. 7. 2022.

20. Benjamin, Ari S., David Rolnick, and Konrad Kording. "Measuring and regularizing networks in function space." arXiv preprint arXiv:1805.08289 (2018).

21. Vitter, Jeffrey S. "Random sampling with a reservoir." ACM Transactions on Mathematical Software (TOMS) 11.1 (1985): 37-57.

22. Wen, Zixin, and Yuanzhi Li. "Toward understanding the feature learning process of self-supervised contrastive learning." In International Conference on Machine Learning, pp. 11112-11122. PMLR, 2021.

23. Wang, Tongzhou, and Phillip Isola. "Understanding contrastive representation learning through alignment and uniformity on the hypersphere." In International Conference on Machine Learning, pp. 9929-9939. PMLR, 2020.

24. Dasgupta, Sanjoy, and Anupam Gupta. "An elementary proof of a theorem of Johnson and Lindenstrauss." Random Structures & Algorithms 22, no. 1 (2003): 60-65.

25. Magen, Avner. "Dimensionality reductions that preserve volumes and distance to affine spaces, and their algorithmic applications." In International Workshop on Randomization and Approximation Techniques in Computer Science, pp. 239-253. Springer, Berlin, Heidelberg, 2002.

26. Gowda, S., Zonooz, B. & Arani, E. (2022). "InBiaseD: Inductive Bias Distillation to Improve Generalization and Robustness through Shape-awareness." Proceedings of The 1st Conference on Lifelong Learning Agents, in Proceedings of Machine Learning Researc 199:1026-1042

27. Gowda, Shruthi, Bahram Zonooz, and Elahe Arani. "Does Thermal data make the detection systems more reliable?." arXiv preprint arXiv:2111.05191 (2021).

28. Bhat, Prashant, Elahe Arani, and Bahram Zonooz. "Distill on the Go: Online knowledge distillation in self-supervised learning." In Proceedings of the IEEE/CVF Conference on Computer Vision and Pattern Recognition, pp. 2678-2687. 2021.

29. Arani, Elahe, Fahad Sarfraz, and Bahram Zonooz. "Noise as a resource for learning in knowledge distillation." In Proceedings of the IEEE/CVF Winter Conference on Applications of Computer Vision, pp. 3129-3138. 2021.

30. Arani, Elahe, Fahad Sarfraz, and Bahram Zonooz. "Computer-Implemented Method of Training a Computer-Implemented Deep Neural Network and Such a Network." U.S. Patent Application 17/382,121, filed February 10, 2022.

**Claims**

1. A computer-implemented method for learning of an artificial neural network on an input of a continual stream of tasks, wherein said method comprises a continual learning model comprising the steps of:

   - maintaining a fixed-size memory buffer using reservoir sampling for storing data distributions of previous tasks, **characterized by**
   - providing the network with:

- an encoder;
- a linear classifier;
- a classifier projection with a multi-layer perceptron;
- a projection head,

wherein the method comprises the steps of:

- implicitly regularizing the continual learning model by learning generalizable features through an auxiliary task such as supervised contrastive learning; and
- explicitly regularizing the learning model by:

- calculating an exponentially moving average of parameters of the continual learning model;
- using predictions of said exponentially moving average for regularizing the continual learning model in a function space of the linear classifier and in a function space of the projection head; and
- aligning geometric structures within a unit hypersphere of the linear classifier with a unit hypersphere of the projection head.

2. The method according to claim 1, **characterized in that** the step of learning generalizable features through an auxiliary task comprises the steps of:

- augmenting multiples correlated views of an input sample; and
- propagating said correlated views forward through the encoder and a projection head of the network.

3. The method according to claim 1 or 2, **characterized in that** the method comprises the step of creating positive and negative embedding pairs of input samples using label information, wherein input samples belonging to a same class of an anchor are labelled as positives, and wherein input samples belonging to a different class than the class of the anchor are labelled as negatives.

4. The method according to any one of the preceding claims, **characterized in that** the method comprises the step of learning visual representations by maximizing a cosine similarity between positive pairs of said correlated views while simultaneously minimizing a cosine similarity between negative pairs of said correlated views.

5. The method according to any one of the preceding claims, **characterized in that** the method comprises the step of using a mapping function for connecting geometric relationships between points of the unit hypersphere of the classifier and points of the unit hypersphere of the projection head.

6. The method according to any one of the preceding claims, **characterized in that** the method comprises the step of regularizing the output activations of the classifier projection by capturing mean element-wise squared differences in the correlations of l2-normalized output activations of the projection head and the correlations of l2-normalized output activations of the classifier projection.

7. A computer-readable medium provided with a computer program, **characterized in that** when said computer program is loaded and executed by a computer, said computer program causes the computer to carry out the steps of the computer-implemented method according to any one of claims 1-6.

8. An autonomous vehicle comprising a data processing system loaded with a computer program, **characterized in that** said program is arranged for causing the data processing system to carry out the steps of the computer-implemented method according to any one of claim 1-6 for enabling said autonomous vehicle to continually adapt and acquire knowledge from an environment surrounding said autonomous vehicle.

Fig. 1

Europäisches
Patentamt

European
Patent Office

Office européen
des brevets

# EUROPEAN SEARCH REPORT

Application Number

EP 23 15 9224

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PRASHANT BHAT ET AL: "Task-Aware Information Routing from Common Representation Space in Lifelong Learning", ARXIV.ORG, CORNELL UNIVERSITY LIBRARY, 201 OLIN LIBRARY CORNELL UNIVERSITY ITHACA, NY 14853, 14 February 2023 (2023-02-14), XP091443867, * abstract; figure 1 * * page 3, line 30 – page 6, line 17 * | 1-8 | INV. G06N3/096 G06N3/045 |
| X | US 2021/192363 A1 (KOLOURI SOHEIL [US] ET AL) 24 June 2021 (2021-06-24) * abstract; figure 3 * * paragraph [0007] – paragraph [0011] * * paragraph [0064] – paragraph [0100] * * paragraph [0116] – paragraph [0117] * | 8 | |
| A | FRANCESCO CAPPIO BORLINO ET AL: "Contrastive Learning for Cross-Domain Open World Recognition", ARXIV.ORG, CORNELL UNIVERSITY LIBRARY, 201 OLIN LIBRARY CORNELL UNIVERSITY ITHACA, NY 14853, 6 June 2022 (2022-06-06), XP091239754, * abstract; figures 1, 2 * * page 2, column 1, line 11 – page 6, column 1 * | 1-8 | TECHNICAL FIELDS SEARCHED (IPC) G06N |

The present search report has been drawn up for all claims

| Place of search | Date of completion of the search | Examiner |
|---|---|---|
| The Hague | 27 June 2023 | Rousset, Antoine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................................
& : member of the same patent family, corresponding document

EPO FORM 1503 03.82 (P04C01)

## EP 4 425 386 A1

**ANNEX TO THE EUROPEAN SEARCH REPORT
ON EUROPEAN PATENT APPLICATION NO.**

EP 23 15 9224

This annex lists the patent family members relating to the patent documents cited in the above-mentioned European search report.
The members are as contained in the European Patent Office EDP file on
The European Patent Office is in no way liable for these particulars which are merely given for the purpose of information.

27-06-2023

| Patent document cited in search report | Publication date | Patent family member(s) | Publication date |
|---|---|---|---|
| US 2021192363 A1 | 24-06-2021 | US 2021192363 A1 | 24-06-2021 |
| | | WO 2021133458 A1 | 01-07-2021 |

**REFERENCES CITED IN THE DESCRIPTION**

**Patent documents cited in the description**

- US 38212122, Arani, Elahe, Fahad Sarfraz, and Bahram Zonooz

**Non-patent literature cited in the description**

- **PARISI, GERMAN I. et al.** Continual lifelong learning with neural networks: A review. *Neural Networks,* 2019, vol. 113, 54-71
- Catastrophic interference in connectionist networks: The sequential learning problem. **MICHAEL MCCLOSKEY ; NEAL J COHEN.** Psychology of learning and motivation. Elsevier, 1989, vol. 24, 109-165
- **ARANI, ELAHE ; FAHAD SARFRAZ ; BAHRAM ZONOOZ.** Learning fast, learning slow: A general continual learning method based on complementary learning system. *arXiv:2201.12604,* 2022
- **BUZZEGA, PIETRO ; MATTEO BOSCHINI ; ANGELO PORRELLO ; DAVIDE ABATI ; SIMONE CALDERARA.** Dark experience for general continual learning: a strong, simple baseline. *Advances in neural information processing systems,* 2020, vol. 33, 15920-15930
- **BHAT, PRASHANT ; BAHRAM ZONOOZ ; ELAHE ARANI.** Consistency is the key to further mitigating catastrophic forgetting in continual learning. *arXiv:2207.04998,* 2022
- **LI, ZHIZHONG ; DEREK HOIEM.** Learning without forgetting. *IEEE transactions on pattern analysis and machine intelligence,* 2017, vol. 40 (12), 2935-2947
- **BHAT, PRASHANT ; BAHRAM ZONOOZ ; ELAHE ARANI.** Task Agnostic Representation Consolidation: a Self-supervised based Continual Learning Approach. *arXiv:2207.06267,* 2022
- **SARFRAZ, FAHAD ; ELAHE ARANI ; BAHRAM ZONOOZ.** SYNERgy between SYNaptic consolidation and Experience Replay for general continual learning. *arXiv:2206.04016,* 2022
- **RATCLIFF, ROGER.** Connectionist models of recognition memory: constraints imposed by learning and forgetting functions. *Psychological review,* 1990, vol. 97 (2), 285
- **GOYAL, ANIRUDH ; YOSHUA BENGIO.** Inductive biases for deep learning of higher-level cognition. *Proceedings of the Royal Society A,* 2022, vol. 478 (2266), 20210068

- **SEBASTIAN RUDER.** An overview of multi-task learning in deep neural networks. *arXiv:1706.05098,* 2017, vol. 1
- **KHOSLA, PRANNAY ; PIOTR TETERWAK ; CHEN WANG ; AARON SARNA ; YONGLONG TIAN ; PHILLIP ISOLA ; AARON MASCHINOT ; CE LIU ; DILIP KRISHNAN.** Supervised contrastive learning. *Advances in Neural Information Processing Systems,* 2020, vol. 33, 18661-18673
- **LOPEZ-PAZ, DAVID ; MARC'AURELIO RANZATO.** Gradient episodic memory for continual learning. *Advances in neural information processing systems,* 2017, vol. 30
- **WANG, ZHEN ; LIU LIU ; YIQUN DUAN ; DACHENG TAO.** Continual learning through retrieval and imagination. *AAAI Conference on Artificial Intelligence,* 2022, vol. 8
- **REBUFFI, SYLVESTRE-ALVISE et al.** icarl: Incremental classifier and representation learning. *Proceedings of the IEEE conference on Computer Vision and Pattern Recognition,* 2017
- **CACCIA, LUCAS ; RAHAF ALJUNDI ; NADER ASADI ; TINNE TUYTELAARS ; JOELLE PINEAU ; EUGENE BELILOVSKY.** New insights on reducing abrupt representation change in online continual learning. *arXiv:2203.03798,* 2022
- **TIWARI, RISHABH ; KRISHNATEJA KILLAMSETTY ; RISHABH IYER ; PRADEEP SHENOY.** GCR: Gradient Coreset Based Replay Buffer Selection For Continual Learning. *Proceedings of the IEEE/CVF Conference on Computer Vision and Pattern Recognition,* 2022, 99-108
- **CHA, HYUNTAK ; JAEHO LEE ; JINWOO SHIN.** Co2l: Contrastive continual learning. *Proceedings of the IEEE/CVF International Conference on Computer Vision,* 2021, 9516-9525
- **LI, JIN ; ZHONG JI ; GANG WANG ; QIANG WANG ; FENG GAO.** Learning from Students: Online Contrastive Distillation Network for General Continual Learning. *Proceedings of the International Joint Conference on Artificial Intelligence,* 2022, vol. 7

- **BENJAMIN, ARI S. ; DAVID ROLNICK ; KONRAD KORDING.** Measuring and regularizing networks in function space. *arXiv:1805.08289,* 2018
- **VITTER, JEFFREY S.** Random sampling with a reservoir. *ACM Transactions on Mathematical Software (TOMS),* 1985, vol. 11 (1), 37-57
- Toward understanding the feature learning process of self-supervised contrastive learning. **WEN, ZIXIN ; YUANZHI LI.** International Conference on Machine Learning. PMLR, 2021, 11112-11122
- Understanding contrastive representation learning through alignment and uniformity on the hypersphere. **WANG, TONGZHOU ; PHILLIP ISOLA.** International Conference on Machine Learning. PMLR, 2020, 9929-9939
- **DASGUPTA, SANJOY ; ANUPAM GUPTA.** An elementary proof of a theorem of Johnson and Lindenstrauss. *Random Structures & Algorithms,* 2003, vol. 22 (1), 60-65
- Dimensionality reductions that preserve volumes and distance to affine spaces, and their algorithmic applications. **MAGEN, AVNER.** International Workshop on Randomization and Approximation Techniques in Computer Science. Springer, 2002, 239-253
- **GOWDA, S. ; ZONOOZ, B. ; ARANI, E.** InBiaseD: Inductive Bias Distillation to Improve Generalization and Robustness through Shape-awareness. *Proceedings of The 1st Conference on Lifelong Learning Agents, in Proceedings of Machine Learning Researc,* 2022, vol. 199, 1026-1042
- **GOWDA, SHRUTHI ; BAHRAM ZONOOZ ; ELAHE ARANI.** Does Thermal data make the detection systems more reliable?. *arXiv:2111.05191,* 2021
- **BHAT, PRASHANT ; ELAHE ARANI ; BAHRAM ZONOOZ.** Distill on the Go: Online knowledge distillation in self-supervised learning. *Proceedings of the IEEE/CVF Conference on Computer Vision and Pattern Recognition,* 2021, 2678-2687
- **ARANI, ELAHE ; FAHAD SARFRAZ ; BAHRAM ZONOOZ.** Noise as a resource for learning in knowledge distillation. *Proceedings of the IEEE/CVF Winter Conference on Applications of Computer Vision,* 2021, 3129-3138